(19) Europäisches Patentamt
European Patent Office
Office européen des brevets

(11) EP 0 792 967 A2

(12) # EUROPÄISCHE PATENTANMELDUNG

(43) Veröffentlichungstag:
**03.09.1997 Patentblatt 1997/36**

(21) Anmeldenummer: **97101008.7**

(22) Anmeldetag: **23.01.1997**

(51) Int. Cl.[6]: **D21H 13/18**, D21H 13/26, F16D 69/02, C08K 7/02, C04B 16/06, D01F 6/80

(84) Benannte Vertragsstaaten:
**DE ES FR GB IE NL**

(30) Priorität: **26.02.1996 DE 19606959**

(71) Anmelder: **Hoechst Trevira GmbH & Co. KG**
**65929 Frankfurt am Main (DE)**

(72) Erfinder: **Neuert, Richard, Dr.**
**90610 Winkelhaid (DE)**

(54) **Faserpulp, Verfahren zu dessen Herstellung und dessen Verwendung**

(57) Beschrieben wird ein Faserpulp enthaltend Stapelfasern aus Polyacrylnitril und Stapelfasern aus aromatischem Copolyamid, das die wiederkehrenden Struktureinheiten der Formeln I, II und gegebenenfalls IIa enthält

$$-OC-Ar^1-CO-NH-Ar^2-NH- \quad (I),$$

$$-OC-Ar^1-CO-NH-Ar^3-NH- \quad (II),$$

$$-OC-Ar^1-CO-NH-Ar^{3a}-NH- \quad (IIa),$$

worin $Ar^1$, $Ar^2$, $Ar^3$ und $Ar^{3a}$ unabhängig voneinander einen zweiwertigen ein- oder mehrkernigen aromatischen Rest darstellen, dessen freie Valenzen sich in para-Stellung oder in meta-Stellung oder in einer zu diesen Stellungen vergleichbaren parallelen, koaxialen oder gewinkelten Stellung zueinander befinden, und
$Ar^2$, $Ar^3$ und gegebenenfalls $Ar^{3a}$ im Einzelfall jeweils unterschiedliche im Rahmen der gegebenen Definitionen liegende Bedeutungen annehmen, und wobei die jeweiligen dem Polymeren zugrundeliegenden Monomerbausteine so ausgewählt werden, daß sich ein in organischen Lösungsmitteln lösliches und vorzugsweise isotrope Lösungen bildendes aromatisches Polyamid ergibt.

Der beschriebene Pulp läßt sich beispielsweise zur Herstellung von Verbundwerkstoffen, von faserverstärkten Zement- oder Betonbauteilen oder zur Herstellung von Papieren einsetzen.

EP 0 792 967 A2

Printed by Rank Xerox (UK) Business Services
2.14.12/3.4

## Beschreibung

Die vorliegende Erfindung betrifft einen Faserpulp enthaltend Polyacrylnitril-Fasern (PAN-Fasern) und Fasern aus aromatischen Polyamiden (Aramidfasern). Derartige Produkte lassen sich zur Herstellung von faserverstärkten Bauteilen, insbesondere Betonformkörpern, oder zur Herstellung von Papieren einsetzen.

Der Einsatz von Faserpulp aus PAN-Fasern oder aus Aramidfasern ist an sich bekannt. Derartige Produkte werden beispielsweise in der EP-A-0,444,473 beschrieben. Diese Produkte finden insbesondere Anwendung bei der Herstellung von Brems- und Kupplungsbelägen. Der Einsatz von PAN-Fasern oder aromatischen oder aliphatischen Polyamidfasern oder von deren Gemischen zur Armierung von hydraulisch abbindenden Materialien ist beispielsweise aus der DE-A-3,002,484 bekannt.

Aramide sind bekanntlich Rohstoffe von hoher thermischer und chemischer Stabilität sowie geringer Brennbarkeit. So zeigen beispielsweise Fasern und Folien aus solchen Rohstoffen sehr gute mechanische Eigenschaften, wie hohe Festigkeit und hohen Anfangsmodul (Elastizitätsmodul) und sind für technische Einsatzgebiete gut geeignet - beispielsweise zur Herstellung von Verbundstoffen.

Es ist bekannt, daß Fäden oder Fasern aus Polyaramiden mit hoher Festigkeit und hohem Anfangsmodul hergestellt werden können, wenn die Amidbindungen an den aromatischen Kernen koaxial oder nahezu parallel zueinander orientiert sind, wodurch starre, stäbchenförmige Polymermoleküle entstehen. Ein typisches Polyamid dieser Art ist beispielsweise Poly-(p-phenylenterephthalamid).

Neben derartigen aromatischen Polyamiden, die infolge ihrer Unlöslichkeit in polaren organischen Lösungsmitteln schwierig herzustellen und zu verarbeiten sind, wurden Copolyamide entwickelt, welche eine gute Löslichkeit in bekannten organischen polaren aprotischen Lösungsmitteln haben, die sich auch gut verspinnen lassen und deren Filamente sich nach Verstreckung durch hohe Festigkeitswerte und Anfangsmoduli auszeichnen. Diese aromatischen Copolyamide zeichnen sich durch eine hervorragende Alkalibeständigkeit aus. Beispiele für derartige aromatische Copolyamide finden sich in der DE-PS-2,556,883, in der DE-A-3,007,063, und in den EP-A-0,199,090, EP-A-0,364,891, EP-A-0,364,892, EP-A-0,364,893 und EP-A-0,424,860.

Ferner werden PAN-Fasern aufgrund ihrer chemischen Stabilität, insbesondere in aggressiven Umgebungen, als Verstärkungsmaterialien eingesetzt. Für technische Anwendungen sind insbesondere hohe Festigkeiten und der hohe Anfangsmodul bei geringen Reißdehnungen gefragt. Aufgrund dieser günstigen Eigenschaftskombination eignen sich PAN-Fasern vorzüglich zum Einsatz bei der Herstellung von Verbundwerkstoffen, insbesondere bei der Betonverstärkung.

Es wurde jetzt gefunden, daß sich Faserpulp aus Mischungen aus speziellen aromatischen Copolyamiden und aus PAN-Fasern vorzüglich zur Herstellung von Verbundwerkstoffen einsetzen läßt. Die vorteilhaften Eigenschaften der beiden Fasertypen ergänzen sich dabei in hervorragender Weise. Neben der besonders guten chemischen Stabilität der PAN-Fasern verbessert die Anwesenheit der Aramidfasern die mechanischen Eigenschaften des resultierenden Verbundwerkstoffes.

Die vorliegende Erfindung betrifft einen Faserpulp enthaltend Stapelfasern aus Polyacrylnitril und Stapelfasern aus aromatischem Copolyamid, das die wiederkehrenden Struktureinheiten der Formeln I, II und gegebenenfalls IIa enthält

$$-OC-Ar^1-CO-NH-Ar^2-NH- \quad (I),$$

$$-OC-Ar^1-CO-NH-Ar^3-NH- \quad (II),$$

$$-OC-Ar^1-CO-NH-Ar^{3a}-NH- \quad (IIa),$$

worin $Ar^1$, $Ar^2$, $Ar^3$ und $Ar^{3a}$ unabhängig voneinander einen zweiwertigen ein- oder mehrkernigen aromatischen Rest darstellen, dessen freie Valenzen sich in para-Stellung oder in meta-Stellung oder in einer zu diesen Stellungen vergleichbaren parallelen, koaxialen oder gewinkelten Stellung zueinander befinden, und
$Ar^2$, $Ar^3$ und gegebenenfalls $Ar^{3a}$ im Einzelfall jeweils unterschiedliche im Rahmen der gegebenen Definitionen liegende Bedeutungen annehmen, und wobei die jeweiligen dem Polymeren zugrundeliegenden Monomerbausteine so ausgewählt werden, daß sich ein in organischen Lösungsmitteln lösliches und vorzugsweise isotrope Lösungen bildendes aromatisches Polyamid ergibt.

Unter dem Begriff "Faserpulp" ist im Rahmen dieser Beschreibung eine Mischung von PAN- und Aramid-Stapelfasern zu verstehen, wobei eine beträchtliche Menge der einzelnen Stapelfasern an den jeweiligen Enden fibrilliert ist. Der Faserpulp weist vorzugsweise eine spezifische Oberfläche (gemessen mit dem "Area-Meter") von mindestens 3 $m^2/g$ auf. Bei der Herstellung dieser Fasermischung kommen üblicherweise Schnittlängen der Stapelfasern von 2 bis 12 mm zum Einsatz.

Der erfindungsgemäße Faserpulp kann in trockener oder vorzugsweise im Gemisch mit Wasser als Faserbrei zum Einsatz kommen.

Die Anteile der Stapelfasersorten im Faserpulp können in weiten Grenzen schwanken. Typische Mengenbereiche belaufen sich auf 5 bis 95 Gew.% PAN-Fasern und 95 bis 5 Gew. % Aramidfasern, bezogen auf das Fasertrockengewicht.

Der Faseranteil im wässrigen Faserpulp-Gemisch beträgt üblicherweise weniger als 10 Gew. %, bezogen auf das Faserpulp-Gemisch.

Bei dem zum Einsatz kommenden Polyacrylnitril handelt es sich um ein Polyacrylnitril-Homopolymeres oder ein Polyacrylnitril-Copolymeres. Bevorzugt wird ein Polyacrylnitril, das mindestens 90 Gew.%, ganz bevorzugt mindestens 99 Gew.% an wiederkehrenden Acrylnitril-Struktureinheiten aufweist.

Als Comonomere eignen sich alle mit Acrylnitril copolymerisierbaren ungesättigten Verbindungen, vorzugsweise ungesättigte Carbonsäuren, wie Acrylsäure, Methacrylsäure oder Itaconsäure; ungesättigte Sulfonsäuren, wie Allyl-, Methallyl- oder Styrolsulfonsäure; ungesättigte Carbonsäureamide, wie Acrylamid oder Methacrylamid; Ester ungesättigter Carbonsäuren, wie die Methyl-, Ethyl-, Propyl- oder Butylester der Acryl- oder der Methyacrylsäure; oder mehrfunktionelle Hydroxyethyl- oder Aminoethylester bzw. deren Derivate mit Acryl- oder Methacrylsäure; Ester von Carbonsäuren mit ungesättigen Alkoholen bzw. Ether auf der Basis ungesättigter Alkohole, wie Vinylester und -ether, beispielsweise Vinylacetat, Vinylstearat, Vinylbutyrat, Bromessigsäurevinylester, Dichloressigsäurevinylester oder Trichloressigsäurevinylester; ungesättigte Aldehyde oder Ketone, wie Acrolein oder Crotonaldehyd; Säurehalogenide ungesättigter Carbonsäuren, wie Acryl- oder Methacrylsäurechlorid; oder weitere mit Acrylnitril copolymerisierbare Monmere, wie Styrol, Butadien, Propylen oder Vinylhalogenide, bispielsweise Vinylchlorid, Vinylidenchlorid oder Vinylbromid.

Ganz besonders bevorzugt werden Polyacrylnitril-Homopolymere oder -Copolymere eingesetzt, deren Molekulargewicht (Gewichtsmittel) 150,000 bis 250,000 beträgt.

Die Festigkeiten der erfindungsgemäß eingesetzten PAN-Fasern betragen üblicherweise 60 bis 115 cN/tex.

Die Anfangsmoduli, bezogen auf 100 % Dehnung, der erfindungsgemäß eingesetzten PAN-Fasern betragen vorzugsweise 1400 bis 2200 cN/tex, insbesondere 1700 bis 2000 cN/tex.

Die Reißdehnungen der erfindungsgemäß eingesetzten PAN-Fasern betragen vorzugsweise 5 bis 30 %, insbesondere 10 bis 18 %.

Die Titer der erfindungsgemäß eingesetzten PAN-Fasern bewegen sich üblicherweise im Bereich von kleiner 10 dtex, vorzugsweise im Bereich von 0,8 bis 3,5 dtex.

Bei den zum Einsatz kommenden aromatischen Copolyamiden handelt es sich um Copolyamide abgeleitet von aromatischen Dicarbonsäure- und aromatischen Diamin-Monomeren. Aramide können geringe Anteile nicht-aromatischer Monomerkomponenten enthalten, beispielsweise bis zu 10 Mol % an aliphatischen oder cycloaliphatischen Dicarbonsäure- oder Diaminkomponenten. Vorzugsweise werden ausschließlich aromatische Monomerkomponenten bei der Herstellung der Aramide eingesetzt.

Unter löslichem aromatischen Polyamid ist im Rahmen dieser Erfindung ein aromatisches Polyamid zu verstehen, daß bei 25°C eine Löslichkeit in N-Methylpyrrolidon von mindestens 50 g/l aufweist.

Vorzugsweise handelt es sich bei dem polaren aprotischen organischen Lösungsmittel um ein Lösungsmittel vom Amidtyp, wie z.B. um N-Methyl-2-pyrrolidon, N,N-Dimethylacetamid, Tetramethylharnstoff, N-Methyl-2-piperidon, N,N'-Dimethylethylenharnstoff, N,N,N',N'-Tetramethylmaleinsäureamid, N-Methylcaprolactam, N-Acetylpyrrolidin, N,N-Diethylacetamid, N-Ethyl-2-pyrrolidon, N,N'-Dimethylpropionsäureamid, N,N-Dimethylisobutylamid, N-Methylformamid, N,N'-Dimethylpropylenharnstoff.

Bei den erfindungsgemäß bevorzugt einzusetzenden aromatischen Polyamiden handelt es sich um Verbindungen, die in polaren aprotischen organischen Lösungsmitteln vorzugsweise unter der Ausbildung isotroper Lösungen löslich sind und die mindestens zwei, insbesondere drei verschiedene sich in den Diamineinheiten unterscheidende wiederkehrende Struktureinheiten gemäß der obigen Definition aufweisen.

Bedeuten irgendwelche Reste zweiwertige aromatische Reste, deren Valenzbindungen sich in para- oder in vergleichbarer koaxialer oder paralleler Position zueinander befinden, so handelt es sich dabei um ein- oder mehrkernige aromatische Kohlenwasserstoffreste oder um heterocyclisch-aromatische Reste, die ein- oder mehrkernig sein können. Im Falle von heterocyclisch-aromatischen Resten weisen diese insbesondere ein oder zwei Sauerstoff-, Stickstoff- oder Schwefelatome im aromatischen Kern auf.

Mehrkernige aromatische Reste können miteinander kondensiert sein oder über C-C-Bindungen oder über -CO-NH- Gruppen linear miteinander verbunden sein.

Die Valenzbindungen, die in koaxialer oder parallel zueinander befindlicher Stellung stehen, sind entgegengesetzt gerichtet. Ein Beispiel für koaxiale, entgegengesetzt gerichtete Bindungen sind die Biphenyl-4,4'-en-Bindungen. Ein Beispiel für parallele, entgegegesetzt gerichtete Bindungen sind die Naphthalin-1,5- oder -2,6-Bindungen, während die Naphthalin-1,8-Bindungen parallel gleichgerichtet sind.

Beispiele für bevorzugte zweiwertige aromatische Reste, deren Valenzbindungen sich in para- oder in vergleichbarer koaxialer oder paralleler Position zueinander befinden, sind einkernige aromatische Reste mit zueinander paraständigen freien Valenzen, insbesondere 1,4-Phenylen oder zweikernige kondensierte aromatische Reste mit parallelen, entgegengesetzt gerichteten Bindungen, insbesondere 1,4-, 1,5- und 2,6-Naphthylen, oder zweikernige über eine

C-C Bindung verknüpfte aromatische Reste mit koaxialen, entgegengesetzt gerichteten Bindungen, insbesondere 4,4'-Biphenylen.

Bedeuten irgendwelche Reste zweiwertige aromatische Reste, deren Valenzbindungen sich in meta- oder in vergleichbarer gewinkelter Position zueinander befinden, so handelt es sich dabei um ein- oder mehrkernige aromatische Kohlenwasserstoffreste oder um heterocyclisch-aromatische Reste, die ein- oder mehrkernig sein können. Im Falle von heterocyclisch-aromatischen Resten weisen diese insbesondere ein oder zwei Sauerstoff-, Stickstoff- oder Schwefelatome im aromatischen Kern auf.

Mehrkernige aromatische Reste können miteinander kondensiert sein oder über C-C-Bindungen oder über Brükkengruppen, wie z.B. -O-, $-CH_2-$, -S-, -CO- oder $-SO_2-$miteinander verbunden sein.

Beispiele für bevorzugte zweiwertige aromatische Reste, deren Valenzbindungen sich in meta- oder in vergleichbarer gewinkelter Position zueinander befinden, sind einkernige aromatische Reste mit zueinander meta-ständigen freien Valenzen, insbesondere 1,3-Phenylen oder zweikernige kondensierte aromatische Reste mit zueinander gewinkelt gerichteten Bindungen, insbesondere 1,6- und 2,7-Naphthylen, oder zweikernige über eine C-C Bindung verknüpfte aromatische Reste mit zueinander gewinkelt gerichteten Bindungen, insbesondere 3,4'-Biphenylen.

Geringere Anteile, beispielsweise bis zu 5 Mol % der Monomereinheiten, bezogen auf das Polymere, können aliphatischer oder cycloaliphatischer Natur sein, beispielsweise Alkylen- oder Cycloalkyleneinheiten darstellen.

Unter Alkylenresten ist verzweigtes und insbesondere geradkettiges Alkylen zu verstehen, beispielsweise Alkylen mit zwei bis vier Kohlenstoffatomen, insbesondere Ethylen.

Unter Cycloalkylenresten sind beispielsweise Reste mit fünf bis acht Kohlenstoffatomen zu verstehen, insbesondere Cycloalkylen.

Alle diese aliphatischen, cycloaliphatischen oder aromatischen Reste können mit inerten Gruppen substituiert sein. Darunter sind Substituenten zu verstehen, die die ins Auge gefaßte Anwendung nicht negativ beeinflussen.

Beispiele für solche Substituenten sind Alkyl, Alkoxy oder Halogen.

Unter Alkylresten ist verzweigtes und insbesondere geradkettiges Alkyl zu verstehen, beispielsweise Alkyl mit ein bis sechs Kohlenstoffatomen, insbesondere Methyl.

Unter Alkoxyresten ist verzweigtes und insbesondere geradkettiges Alkoxy zu verstehen, beispielsweise Alkoxy mit ein bis sechs Kohlenstoffatomen, insbesondere Methoxy.

Bedeuten irgendwelche Reste Halogen, so handelt es sich dabei beispielsweise um Fluor, Brom oder insbesondere um Chlor.

Bevorzugt verwendet man aromatische Copolyamide auf der Basis von unsubstituierten Resten.

Als Dicarbonsäureeinheit in den aromatischen Copolyamiden enthaltend die wiederkehrenden Struktureinheiten der Formeln I, II und gegebenenfalls III setzt man vorzugsweise Terephthalsäureeinheiten ein.

Im bevorzugten Faserpulp werden aromatische Copolyamide eingesetzt, die die wiederkehrenden Struktureinheiten der Formeln III und IV oder der Formeln III und VI oder der Formeln III, IV und V oder der Formeln III, IV und VI oder der Formeln IV, V und VI oder der Formeln III, IV und VII enthalten

$$-OC-Ar^1-CO-NH-Ar^4-NH- \quad (III),$$

$$-OC-Ar^1-CO-NH-Ar^5-Q-Ar^6-NH- \quad (IV),$$

$$-OC-Ar^1-CO-NH-Ar^7-Y-Ar^8-NH- \quad (V),$$

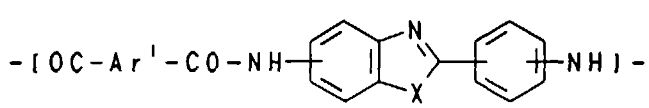

(VI),

$$-OC-Ar^1-CO-NH-Ar^9-NH- \quad (VII),$$

worin $Ar^1$, $Ar^4$ und $Ar^9$ unabhängig voneinander einen zweiwertigen ein- oder mehrkernigen aromatischen Rest darstellen, dessen freie Valenzen sich in para-Stellung oder in einer zu dieser Stellung vergleichbaren parallelen oder koaxialen Stellung zueinander befinden, insbesondere einkernige oder zweikernige aromatische Reste sind, $Ar^5$ und $Ar^6$ unabhängig voneinander einen zweiwertigen ein- oder mehrkernigen aromatischen Rest darstellen, dessen freie Valenzen sich in para-Stellung oder in einer zu dieser Stellung vergleichbaren parallelen oder koaxialen Stellung zueinander befinden, oder worin $Ar^6$ zusätzlich einen zweiwertigen ein- oder mehrkernigen aromatischen Rest darstellen kann, dessen freie Valenzen sich in meta-Stellung oder in einer zu dieser Stellung

vergleichbaren gewinkelten Stellung zueinander befinden,

Q eine direkte C-C-Bindung oder eine Gruppe der Formel -O-, -S-, $-SO_2-$, -O-Phenylen-O- oder Alkylen ist,

$Ar^7$ und $Ar^8$ eine der für $Ar^5$ und $Ar^6$ definierten Bedeutungen annehmen,

Y eine der für Q definierten Bedeutungen annimmt oder zusätzlich eine Gruppe der Formel -HN-CO- bedeuten kann, und

X eine Gruppe der Formel -O-, -S- oder insbesondere $-NR^1-$ bedeutet, worin $R^1$ Alkyl, Cycloalkyl, Aryl, Aralkyl oder insbesondere Wasserstoff ist.

Besonders bevorzugt wird ein Faserpulp enthaltend aromatische Copolyamide mit den wiederkehrenden Struktureinheiten der Formeln III, IV und V, worin $Ar^1$ 1,4-Phenylen ist, $Ar^4$ 1,4-Phenylen oder ein zweiwertiger Rest des 4,4'-Diaminobenzanilids ist, $Ar^5$, $Ar^6$ und $Ar^7$ 1,4-Phenylen darstellen, $Ar^8$ 1,3-Phenylen bedeutet, Q -O-1,4-Phenylen-O- ist und Y -O- ist; dabei werden diejenigen aromatischen Copolyamide besonders bevorzugt eingesetzt, bei denen sich die Mengenanteile der wiederkehrenden Struktureinheiten der Formeln III, IV und V sich innerhalb folgender Bereiche, bezogen auf die Gesamtmenge dieser Struktureinheiten, bewegen:

wiederkehrende Struktureinheit der Formel III: 40-60 Mol%,
wiederkehrende Struktureinheit der Formel IV: 1-20 Mol%, und
wiederkehrende Struktureinheit der Formel V: 15-40 Mol%.

Ebenfalls besonders bevorzugt wird ein Faserpulp enthaltend aromatische Copolyamide mit den wiederkehrenden Struktureinheiten der Formeln III, IV und V, worin $Ar^1$ 1,4-Phenylen ist, $Ar^4$ 1,4-Phenylen oder ein zweiwertiger Rest des 4,4'-Diaminobenzanilids ist, $Ar^5$ und $Ar^6$ 1,4-Phenylen darstellen, $Ar^7$ und $Ar^8$ methyl-, methoxy- oder chlorsubstituiertes 1,4-Phenylen bedeuten, Q -O-1,4-Phenylen-O- ist und Y eine direkte C-C-Bindung ist; dabei werden diejenigen aromatischen Copolyamide besonders bevorzugt eingesetzt, bei denen sich die Mengenanteile der wiederkehrenden Struktureinheiten der Formeln III, IV und V sich innerhalb folgender Bereiche, bezogen auf die Gesamtmenge dieser Struktureinheiten, bewegen:

wiederkehrende Struktureinheit der Formel III: 10-30 Mol%,
wiederkehrende Struktureinheit der Formel IV: 10-30 Mol%, und
wiederkehrende Struktureinheit der Formel V: 10-60 Mol%.

Ebenfalls besonders bevorzugt wird ein Faserpulp enthaltend aromatische Copolyamide mit den wiederkehrenden Struktureinheiten der Formeln III, IV und V, worin $Ar^1$ 1,4-Phenylen ist, $Ar^4$ 1,4-Phenylen oder ein zweiwertiger Rest des 4,4'-Diaminobenzanilids ist, $Ar^5$ und $Ar^6$ 1,4-Phenylen darstellen, $Ar^7$ und $Ar^8$ methyl-, methoxy- oder chlorsubstituiertens 1,4-Phenylen bedeuten, Q -O- ist und Y eine direkte C-C-Bindung ist; dabei werden diejenigen aromatischen Copolyamide besonders bevorzugt eingesetzt, bei denen sich die Mengenanteile der wiederkehrenden Struktureinheiten der Formeln III, IV und V sich innerhalb folgender Bereiche, bezogen auf die Gesamtmenge dieser Struktureinheiten, bewegen:

wiederkehrende Struktureinheit der Formel III: 10-30 Mol%,
wiederkehrende Struktureinheit der Formel IV: 10-30 Mol%, und
wiederkehrende Struktureinheit der Formel V: 10-60 Mol%.

Ebenfalls besonders bevorzugt wird ein Faserpulp enthaltend aromatische Copolyamide mit den wiederkehrenden Struktureinheiten der Formeln III und IV, worin $Ar^1$ 1,4-Phenylen ist, $Ar^4$ 1,4-Phenylen oder ein zweiwertiger Rest des 4,4'-Diaminobenzanilids ist, $Ar^5$ 1,4-Phenylen ist, $Ar^6$ 1,3-Phenylen ist und Q -O- ist; dabei werden diejenigen aromatischen Copolyamide besonders bevorzugt eingesetzt, bei denen sich die Mengenanteile der wiederkehrenden Struktureinheiten der Formeln III und IV sich innerhalb folgender Bereiche, bezogen auf die Gesamtmenge dieser Struktureinheiten, bewegen:

wiederkehrende Struktureinheit der Formel III: 20-50 Mol%, und
wiederkchrende Struktureinheit der Formel IV: 40-60 Mol%.

Ebenfalls besonders bevorzugt wird ein Faserpulp enthaltend aromatische Copolyamide mit den wiederkehrenden Struktureinheiten der Formeln III und VI, worin $Ar^1$ 1,4-Phenylen ist, $Ar^4$ 1,4-Phenylen oder ein zweiwertiger Rest des 4,4'-Diaminobenzanilids ist und X -NH- bedeutet; dabei werden diejenigen aromatischen Copolyamide besonders bevorzugt eingesetzt, bei denen sich die Mengenanteile der wiederkehrenden Struktureinheiten der Formeln III und VI sich innerhalb folgender Bereiche, bezogen auf die Gesamtmenge dieser Struktureinheiten, bewegen:

wiederkehrende Struktureinheit der Formel III: 30 - 70 Mol%, und
wiederkehrende Struktureinheit der Formel VI: 70 - 30 Mol%.

Ebenfalls besonders bevorzugt wird ein Faserpulp enthaltend aromatische Copolyamide mit den wiederkehrenden Struktureinheiten der Formeln III, IV und VI, worin $Ar^1$ 1,4-Phenylen ist, $Ar^4$ 1,4-Phenylen oder ein zweiwertiger Rest des 4,4'-Diaminobenzanilids ist, $Ar^5$ 1,4-Phenylen ist, $Ar^6$ 1,4- oder 1,3-Phenylen ist, Q -O- oder -O-1,4-Phenylen-O- bedeutet und X -NH- ist; dabei werden diejenigen aromatischen Copolyamide besonders bevorzugt eingesetzt, bei denen sich die Mengenanteile der wiederkehrenden Struktureinheiten der Formeln III, IV und VI sich innerhalb folgender Bereiche, bezogen auf die Gesamtmenge dieser Struktureinheiten, bewegen:

wiederkehrende Struktureinheit der Formel III: 10 - 30 Mol%,
wiederkehrende Struktureinheit der Formel IV: 10 - 40 Mol%, und
wiederkehrende Struktureinheit der Formel VI: 50 - 70 Mol%.

Ebenfalls besonders bevorzugt wird ein Faserpulp enthaltend aromatische Copolyamide mit den wiederkehrenden Struktureinheiten der Formeln IV, V und VI, worin $Ar^1$ 1,4-Phenylen ist, $Ar^5$ 1,4-Phenylen ist, $Ar^6$ 1,4- oder 1,3-Phenylen ist, Q - O- oder -O-1,4-Phenylen-O- bedeutet, $Ar^7$ und $Ar^8$ methyl-, methoxy- oder chlorsubstituiertes 1,4-Phenylen ist, Y eine direkte C-C-Bindung bedeutet und X - NH- sind; dabei werden diejenigen aromatischen Copolyamide besonders bevorzugt eingesetzt, bei denen sich die Mengenanteile der wiederkehrenden Struktureinheiten der Formeln IV, V und VI sich innerhalb folgender Bereiche, bezogen auf die Gesamtmenge dieser Struktureinheiten, bewegen:

wiederkehrende Struktureinheit der Formel IV: 10 - 40 Mol%
wiederkehrende Struktureinheit der Formel V: 30 - 60 Mol%, und
wiederkehrende Struktureinheit der Formel VI: 50 - 70 Mol%.

Ebenfalls besonders bevorzugt wird ein Faserpulp enthaltend aromatische Copolyamide mit den wiederkehrenden Struktureinheiten der Formeln III, IV und VII, worin $Ar^1$ und $Ar^4$ 1,4-Phenylen sind, $Ar^5$ und $Ar^6$ methyl-, methoxy- oder chlorsubstituiertes 1,4-Phenylen sind, Q eine direkte C-C-Bindung bedeutet, und $Ar^9$ 1,3-Phenylen ist; dabei werden diejenigen aromatischen Copolyamide besonders bevorzugt eingesetzt, bei denen sich die Mengenanteile der wiederkehrenden Struktureinheiten der Formeln III, IV und VII sich innerhalb folgender Bereiche, bezogen auf die Gesamtmenge dieser Struktureinheiten, bewegen:

wiederkehrende Struktureinheit der Formel III: 10 - 35 Mol%,
wiederkehrende Struktureinheit der Formel IV: 20 - 60 Mol%, und
wiederkehrende Struktureinheit der Formel VII: 10 - 35 Mol%.

Beispiele für bevorzugte Diaminkombinationen, die diesen bevorzugten wiederkehrenden Struktureinheiten der Formeln III und IV oder der Formeln III und VI oder der Formeln III, IV und V oder der Formeln III, IV und VI oder der Formeln III, IV und VII zugrundeliegen, sind 1,4-Phenylendiamin und 3,4'-Diaminodiphenylether; 1,4-Phenylendiamin, 4,4'-Diaminodiphenylmethan und 3,3'-Dichlor-, 3,3'-Dimethyl- oder 3,3'-Dimethoxybenzidin; sowie 1,4-Phenylendiamin, 1,4-Bis-(aminophenoxy)-benzol und 3,3'-Dichlor-, 3,3'-Dimethyl- oder 3,3'-Dimethoxybenzidin; sowie 1,4-Phenylendiamin, 3,4'-Diaminodiphenylether und 3,3'-Dichlor-, 3,3'-Dimethyl- oder 3,3'-Dimethoxybenzidin; sowie 1,4-Phenylendiamin, 3,4'-Diaminodiphenylether und 4,4'-Diaminobenzanilid; sowie 1,4-Phenylendiamin, 1,4-Bis-(aminophenoxy)-benzol und 3,4'-Diaminodiphenylether; sowie 1,4-Phenylendiamin und 5(6)-Amino-2-(para-aminophenyl)-benzimidazol; sowie 1,4-Phenylendiamin, 5(6)-Amino-2-(para-aminophenyl)-benzimidazol und 3,3'-Dichlor-, 3,3'-Dimethyl- oder 3,3'-Dimethoxybenzidin; sowie 1,4-Phenylendiamin, 5(6)-Amino-2-(para-aminophenyl)-benzimidazol und 3,4'-Diaminodiphenylether; sowie 3,3'-Dichlor-, 3,3'-Dimethyl- oder 3,3'-Dimethoxybenzidin, 5(6)-Amino-2-(para-aminophenyl)-benzimidazol und 1,4-Bis-(aminophenoxy)-benzol; sowie 5(6)-Amino-2-(para-aminophenyl)-benzimidazol, 3,3'-Dichlor-, 3,3'-Dimethyl- oder 3,3'-Dimethoxybenzidin und 3,4'-Diaminodiphenylether; sowie 1,4-Phenylendiamin, 5(6)-Amino-2-(para-aminophenyl)-benzimidazol und 1,4-Bis-(aminophenoxy)-benzol; sowie 1,4-Phenylendiamin, 3,3'-Dimethyl-, oder 3,3'-Dimethoxy- oder 3,3'-Dichlorbenzidin und 1,3-Phenylendiamin.

Aramide, die sich von solchen Diaminkombinationen ableiten und die sich bevorzugt gemäß der vorliegenden Erfindung einsetzen lassen, sind zum Teil in den EP-A-0,199,090, EP-A-0,364,891, EP-A-0,364,892, EP-A-0,364,893 und EP-A-0,424,860 beschrieben.

Die erfindungsgemäß einzusetzenden aromatischen Polyamide sind an sich bekannt.

Die Polykondensation und die Herstellung von Fasern aus den erfindungsgemäß einzusetzenden Coaramiden erfolgt nach an sich bekannten Verfahren, wie diese z.B. in den oben aufgeführten Schriften beschrieben worden sind.

Die Festigkeiten der erfindungsgemäß eingesetzten Aramidfasern betragen üblicherweise 130 bis 290 cN/tex.

Die Anfangsmoduli, bezogen auf 100 % Dehnung, der erfindungsgemäß eingesetzten Aramidfasern betragen vorzugsweise 35 bis 110 N/tex, insbesondere 45 bis 70 N/tex.

Die Reißdehnungen der erfindungsgemäß eingesetzten PAN-Fasern betragen vorzugsweise 5 bis 30 %, insbesondere 10 bis 18 %.

Die Titer der erfindungsgemäß eingesetzten Aramidfasern bewegen sich üblicherweise im Bereich von kleiner gleich 15 dtex, vorzugsweise im Bereich von 0,8 bis 2,2 dtex.

Die erfindungsgemäß einzusetzenden aromatischen Copolyamide müssen ein für die Faserherstellung ausreichendes Molekulargewicht aufweisen. Eine ausreichende Molekül-Kettenlänge liegt beispielsweise vor, wenn die Viskosität der bei der Polykondensation erhaltenen Polymerlösung einer inhärenten Viskosität des Polymers von mehr als 2,0 dl/g, vorzugsweise 2,5 bis 7,0 dl/g, entspricht.

Unter inhärenter Viskosität wird der Ausdruck

$$\eta_{inh} = \frac{\ln \eta_{rel}}{c} \text{ verstanden.}$$

$\eta_{rel}$ bedeutet dabei die relative Viskosität, c die angewandte Konzentration in g/100ml.

Sie wird für die Zwecke der vorliegenden Erfindung bestimmt an 0,25 %igen Lösungen von Polymer in N-Methylpyrrolidon bei 25°C.

Die Herstellung des erfindungsgemäßen Faserpulps kann durch das nachstehend beschriebene Verfahren erfolgen.

Ein Verfahren zur Herstellung des erfindungsgemäßen Faserpulps umfasst die Maßnahmen:

a) Zugabe von bis zu 10 Gew.% von Stapelfasern aus Polyacrylnitril und Stapelfasern aus aromatischem Polyamid, entweder in Form einer Fasermischung oder getrennte Zugabe jeder Fasersorte, sowie von mindestens 90 Gew.% Wasser in einen Pulper, der vorzugsweise mit einem Rührer ausgestattet ist, und

b) Behandlung der Fasermischung im Pulper in an sich bekannter Weise, bis der gewünschte Fibrillierungsgrad der Fasern erreicht ist.

Ein besonders bevorzugtes Verfahren zur Herstellung des erfindungsgemäßen Faserpulps umfasst die Maßnahmen:

a1) Zugabe von bis zu 10 Gew.% von Stapelfasern aus Polyacrylnitril und/oder Stapelfasern aus aromatischem Polyamid, entweder in Form einer Fasermischung oder getrennte Zugabe jeder Fasersorte, sowie von mindestens 90 Gew.% Wasser in einen ersten Pulper,

a2) Vorbehandlung des Gemisches im ersten Pulper für eine derartige Zeitspanne und unter derartigen Bedingungen, so daß eine weitgehend homogene wässrige Fasermischung erhalten wird,

b1) Überführen der Fasermischung aus Schritt a2) in einen Refiner, um eine zusätzliche Öffnung der Faseroberflächen zu bewirken und den Fibrillierungsgrad zu erhöhen,

b2) Überführung der Fasermischung aus Schritt b1) in einen zweiten Pulper und Behandlung der Fasermischung in an sich bekannter Weise, um den Öffnungsgrad der Fasermischung zu erhöhen, und gegebenenfalls Zugabe weiterer Stapelfasern aus Polyacrylnitril und/oder Stapelfasern aus aromatischem Polyamid,

b3) Rückführung der Fasermischung aus dem zweiten Pulper in den Refiner gemäß Schritt b1) und Rückführung der Fasermischung aus dem Refiner in den zweiten Pulper gemäß Schritt b2), und

b4) Wiederholung von Schritt b3) bis der gewünschte Fibrillierungsgrad erreicht ist.

In einer besonders bevorzugten Ausführungsform dieser zweiten Verfahrensvariante werden in den ersten Pulper nur Stapelfasern aus aromatischem Polyamid zugegeben und diese in den ersten Durchläufen im Refiner und im zweiten Pulper behandelt, beispielsweise in den ersten drei Durchläufen, und anschließend werden die PAN-Fasern zugegeben und zusammen mit den Aramidfasern in weiteren Durchläufen durch den Refiner und den zweiten Pulper zu einem erfindungsgemäßen Faserpulp verarbeitet.

Der mittels diesem zweiten Verfahren erhaltene Faserpulp zeichnet sich durch ein gesteigertes Wasserrückhaltevermögen (WRV) aus.

Das WRV wird wie folgt ermittelt: 10 g gut durchfeuchteter Fasermischung werden 1 Minute lang im Vakuum bei

0,5 bar durch Abziehen des Wassers entwässert. Von dieser Probe werden 6 g entnommen und bei 2000 U/min zentrifugiert und ausgewogen (Gewicht A). Die zentrifugierte Probe wird anschließend 2 Stunden bei 110°C im Umluftofen getrocknet und erneut ausgewogen (Gewicht B). Das WRV in Prozent wird nach der Formel [(A-B)/B] * 100 ermittelt.

Der Anstieg des WRV während der verschiedenen Durchläufe des Schrittes b4) ist üblicherweise mit einer Vergrößerung der spezifischen Oberfläche der fibrillierten Fasern verbunden (gemessen mit dem "Area-Meter"). Die spezifische Oberfläche des erfindungsgemäßen Faserpulps bewegt sich typischerweise im Bereich von 2 bis 10 $g/m^2$, vorzugsweise im Bereich von 3 bis 7 $g/m^2$. Bei den verschiedenen Durchläufen des Schrittes b4) wird überraschenderweise die Länge der Stapelfasern nicht signifikant verringert; es hat sich herausgestellt, daß nach einer bestimmten Zahl von Durchläufen des Schrittes b4) der Fibrillierungsgrad der Fasern einem Grenzwert zustrebt. Eine weitere Behandlung unter drastischen Bedingungen führt im wesentlichen nur noch zur Verringerung der Länge der Stapelfasern.

Typische WRV-Werte für den erfindungsgemäßen Faserpulp bewegen sich im Bereich von 60 bis 170 %.

Der erfindungsgemäße Faserpulp zeichnet sich durch die oben angegebene vorteilhafte Kombination von Eigenschaften aus; der Anteil an "Einkräuselungen" - also an Zusammenballungen von Fasern einer Sorte - kann überraschend gering gehalten werden.

Der erfindungsgemäße Faserpulp läßt sich zur Herstellung von Verbundwerkstoffen, Brems- oder Kupplungsbelägen, Flachdichtungen nach dem Kalanderprozeß, Verstärkung von Elastomeren, insbesondere von faserverstärkten Zement- oder Betonbauteilen oder zur Verstärkung von thermo- oder duroplastischen Bauteilen im Spritzgieß- oder Extrusionsprozeß, oder zur Herstellung von Papieren einsetzen. Die Verwendung des Faserpulp zu diesen Zwecken ist ebenfalls Gegenstand der vorliegenden Erfindung.

Das nachfolgende Beispiel verdeutlicht die Erfindung ohne diese zu begrenzen.

Beispiel

Eine 1:1 Gewichtsmischung von Stapelfasern aus Polyacrylnitril-Homopolymerem ($^R$Dolanit 10) und aus aromatischem Copolyamid abgeleitet von Terephthaloylchlorid, 50 Mol % p-Phenylendiamin, 25 Mol % 3,3-Dimethylbenzidin und 25 Mol % 1,4-Bis-(4-aminophenoxy)-benzol (mit jeweils 6 mm Stapellänge) wurde in einem ersten Pulper mit Wasser vorbehandelt (Wasseranteil im Gemisch 90 Gew. %), so daß ein weitgehend homogenes Gemisch entstand. Dieses wurde über einen Refiner in einem zweiten Pulper homogenisiert und erneut durch den Refiner gefahren; anschließend wurde diese Mischung mehrmals über den Refiner in den zweiten Pulper zurückgeführt und wie oben beschrieben behandelt. Nach jedem Durchlauf wurden Proben entnommen und das Wasserrückhaltevermögen (WRV) bestimmt. Es wurden folgende Werte ermittelt:

| Durchlauf im 2. Pulper | 4. | 5. | 6. | 7. |
|---|---|---|---|---|
| WRV (%) | 70 | 85 | 108 | 110 |

## Patentansprüche

1. Faserpulp enthaltend Stapelfasern aus Polyacrylnitril und Stapelfasern aus aromatischem Copolyamid, das die wiederkehrenden Struktureinheiten der Formeln I, II und gegebenenfalls IIa enthält

$$-OC-Ar^1-CO-NH-Ar^2-NH- \quad (I),$$

$$-OC-Ar^1-CO-NH-Ar^3-NH- \quad (II),$$

$$-OC-Ar^1-CO-NH-Ar^{3a}-NH- \quad (IIa),$$

worin $Ar^1$, $Ar^2$, $Ar^3$ und $Ar^{3a}$ unabhängig voneinander einen zweiwertigen ein- oder mehrkernigen aromatischen Rest darstellen, dessen freie Valenzen sich in para-Stellung oder in meta-Stellung oder in einer zu diesen Stellungen vergleichbaren parallelen, koaxialen oder gewinkelten Stellung zueinander befinden, und $Ar^2$, $Ar^3$ und gegebenenfalls $Ar^{3a}$ im Einzelfall jeweils unterschiedliche im Rahmen der gegebenen Definitionen liegende Bedeutungen annehmen, und wobei die jeweiligen dem Polymeren zugrundeliegenden Monomerbausteine so ausgewählt werden, daß sich ein in organischen Lösungsmitteln lösliches und vorzugsweise isotrope Lösungen bildendes aromatisches Polyamid ergibt.

**2.** Faserpulp nach Anspruch 1, dadurch gekennzeichnet, daß das Polyacrylnitril mindestens 90 Gew.% an wiederkehrenden Acrylnitril-Struktureinheiten aufweist.

**3.** Faserpulp nach Anspruch 1, dadurch gekennzeichnet, daß das aromatische Copolyamid die wiederkehrenden Struktureinheiten der Formeln III und IV oder der Formeln III und VI oder der Formeln III, IV und V oder der Formeln III, IV und VI oder der Formeln IV, V und VI oder der Formeln III, IV und VII enthält

$$-OC-Ar^1-CO-NH-Ar^4-NH- \quad (III),$$

$$-OC-Ar^1-CO-NH-Ar^5-Q-Ar^6-NH- \quad (IV),$$

$$-OC-Ar^1-CO-NH-Ar^7-Y-Ar^8-NH- \quad (V),$$

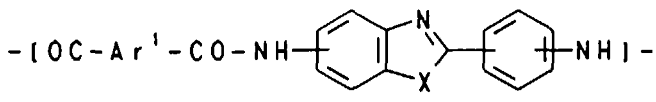
(VI),

$$-OC-Ar^1-CO-NH-Ar^9-NH- \quad (VII),$$

worin $Ar^1$, $Ar^4$ und $Ar^9$ unabhängig voneinander einen zweiwertigen ein- oder mehrkernigen aromatischen Rest darstellen, dessen freie Valenzen sich in para-Stellung oder in einer zu dieser Stellung vergleichbaren parallelen oder koaxialen Stellung zueinander befinden, insbesondere einkernige oder zweikernige aromatische Reste sind,
$Ar^5$ und $Ar^6$ unabhängig voneinander einen zweiwertigen ein- oder mehrkernigen aromatischen Rest darstellen, dessen freie Valenzen sich in para-Stellung oder in einer zu dieser Stellung vergleichbaren parallelen oder koaxialen Stellung zueinander befinden, oder worin $Ar^6$ zusätzlich einen zweiwertigen ein- oder mehrkernigen aromatischen Rest darstellen kann, dessen freie Valenzen sich in meta-Stellung oder in einer zu dieser Stellung vergleichbaren gewinkelten Stellung zueinander befinden,
Q eine direkte C-C-Bindung oder eine Gruppe der Formel -O-, -S-, $-SO_2-$, -O-Phenylen-O- oder Alkylen ist,
$Ar^7$ und $Ar^8$ eine der für $Ar^5$ und $Ar^6$ definierten Bedeutungen annehmen,
Y eine der für Q definierten Bedeutungen annimmt oder zusätzlich eine Gruppe der Formel -HN-CO- bedeuten kann, und
X eine Gruppe der Formel -O-, -S- oder insbesondere $-NR^1-$ bedeutet, worin $R^1$ Alkyl, Cycloalkyl, Aryl, Aralkyl oder insbesondere Wasserstoff ist.

**4.** Faserpulp nach Anspruch 3, dadurch gekennzeichnet, daß das aromatische Copolyamid die wiederkehrenden Struktureinheiten der Formeln III, IV und V enthält, worin $Ar^1$ 1,4-Phenylen ist, $Ar^4$ 1,4-Phenylen oder ein zweiwertiger Rest des 4,4'-Diaminobenzanilids ist, $Ar^5$, $Ar^6$ und $Ar^7$ 1,4-Phenylen darstellen, $Ar^8$ 1,3-Phenylen bedeutet, Q -O-1,4-Phenylen-O- ist und Y -O- ist, wobei sich die Mengenanteile der wiederkehrenden Struktureinheiten der Formeln III, IV und V vorzugsweise innerhalb folgender Bereiche, bezogen auf die Gesamtmenge dieser Struktureinheiten, bewegen:

wiederkehrende Struktureinheit der Formel III: 40-60 Mol%,
wiederkehrende Struktureinheit der Formel IV: 1-20 Mol%, und
wiederkehrende Struktureinheit der Formel V: 15-40 Mol%.

**5.** Faserpulp nach Anspruch 3, dadurch gekennzeichnet, daß das aromatische Copolyamid die wiederkehrenden Struktureinheiten der Formeln III, IV und V enthält, worin $Ar^1$ 1,4-Phenylen ist, $Ar^4$ 1,4-Phenylen oder ein zweiwertiger Rest des 4,4'-Diaminobenzanilids ist, $Ar^5$ und $Ar^6$ 1,4-Phenylen darstellen, $Ar^7$ und $Ar^8$ methyl-, methoxy- oder chlorsubstituiertens 1,4-Phenylen bedeuten, Q -O-1,4-Phenylen-O- ist und Y eine direkte C-C-Bindung ist, wobei sich die Mengenanteile der wiederkehrenden Struktureinheiten der Formeln III, IV und V vorzugsweise innerhalb folgender Bereiche, bezogen auf die Gesamtmenge dieser Struktureinheiten, bewegen:

wiederkehrende Struktureinheit der Formel III: 10-30 Mol%,
wiederkehrende Struktureinheit der Formel IV: 10-30 Mol%, und
wiederkehrende Struktureinheit der Formel V: 10-60 Mol%.

6. Faserpulp nach Anspruch 3, dadurch gekennzeichnet, daß das aromatische Copolyamid die wiederkehrenden Struktureinheiten der Formeln III, IV und V enthält, worin $Ar^1$ 1,4-Phenylen ist, $Ar^4$ 1,4-Phenylen oder ein zweiwertiger Rest des 4,4'-Diaminobenzanilids ist, $Ar^5$ und $Ar^6$ 1,4-Phenylen darstellen, $Ar^7$ und $Ar^8$ methyl-, methoxy- oder chlorsubstituiertens 1,4-Phenylen bedeuten, Q -O- ist und Y eine direkte C-C-Bindung ist, wobei sich die Mengenanteile der wiederkehrenden Struktureinheiten der Formeln III, IV und V vorzugsweise innerhalb folgender Bereiche, bezogen auf die Gesamtmenge dieser Struktureinheiten, bewegen:

wiederkehrende Struktureinheit der Formel III: 10-30 Mol%,
wiederkehrende Struktureinheit der Formel IV: 10-30 Mol%, und
wiederkehrende Struktureinheit der Formel V: 10-60 Mol%.

7. Faserpulp nach Anspruch 3, dadurch gekennzeichnet, daß das aromatische Copolyamid die wiederkehrenden Struktureinheiten der Formeln III und IV enthält, worin $Ar^1$ 1,4-Phenylen ist, $Ar^4$ 1,4-Phenylen oder ein zweiwertiger Rest des 4,4'-Diaminobenzanilids ist, $Ar^5$ 1,4-Phenylen ist, $Ar^6$ 1,3-Phenylen ist und Q -O- ist, wobei sich die Mengenanteile der wiederkehrenden Struktureinheiten der Formeln III und IV vorzugsweise innerhalb folgender Bereiche, bezogen auf die Gesamtmenge dieser Struktureinheiten, bewegen:

wiederkehrende Struktureinheit der Formel III: 20-50 Mol%, und
wiederkehrende Struktureinheit der Formel IV: 40-60 Mol%.

8. Faserpulp nach Anspruch 3, dadurch gekennzeichnet, daß das aromatische Copolyamid die wiederkehrenden Struktureinheiten der Formeln III und VI enthält, worin $Ar^1$ 1,4-Phenylen ist, $Ar^4$ 1,4-Phenylen oder ein zweiwertiger Rest des 4,4'-Diaminobenzanilids ist und X -NH- bedeutet, wobei sich die Mengenanteile der wiederkehrenden Struktureinheiten der Formeln III und VI vorzugsweise innerhalb folgender Bereiche, bezogen auf die Gesamtmenge dieser Struktureinheiten, bewegen:

wiederkehrende Struktureinheit der Formel III: 30-70 Mol%, und
wiederkehrende Struktureinheit der Formel VI: 70-30 Mol%.

9. Faserpulp nach Anspruch 3, dadurch gekennzeichnet, daß das aromatische Copolyamid die wiederkehrenden Struktureinheiten der Formeln III, IV und VI enthält, worin $Ar^1$ 1,4-Phenylen ist, $Ar^4$ 1,4-Phenylen oder ein zweiwertiger Rest des 4,4'-Diaminobenzanilids ist, $Ar^5$ 1,4-Phenylen ist, $Ar^6$ 1,4- oder 1,3-Phenylen ist, Q - O- oder -O-1,4-Phenylen-O- bedeutet und X -NH- ist, wobei sich die Mengenanteile der wiederkehrenden Struktureinheiten der Formeln III, IV und VI vorzugsweise innerhalb folgender Bereiche, bezogen auf die Gesamtmenge dieser Struktureinheiten, bewegen:

wiederkehrende Struktureinheit der Formel III: 10-30 Mol%,
wiederkehrende Struktureinheit der Formel IV: 10-40 Mol%, und
wiederkehrende Struktureinheit der Formel VI: 50-70 Mol%.

10. Faserpulp nach Anspruch 3, dadurch gekennzeichnet, daß das aromatische Copolyamid die wiederkehrenden Struktureinheiten der Formeln III, IV und VI enthält, worin $Ar^1$ 1,4-Phenylen ist, $Ar^5$ 1,4-Phenylen ist, $Ar^6$ 1,4- oder 1,3-Phenylen ist, Q -O- oder -O-1,4-Phenylen-O- bedeutet, $Ar^7$ und $Ar^8$ methyl-, methoxy- oder chlorsubstituiertes 1,4-Phenylen ist, Y eine direkte C-C-Bindung bedeutet und X - NH- ist, wobei sich die Mengenanteile der wiederkehrenden Struktureinheiten der Formeln IV, V und VI vorzugsweise innerhalb folgender Bereiche, bezogen auf die Gesamtmenge dieser Struktureinheiten, bewegen:

wiederkehrende Struktureinheit der Formel IV: 10-40 Mol%,
wiederkehrende Struktureinheit der Formel V: 30-60 Mol%, und
wiederkehrende Struktureinheit der Formel VI: 50-70 Mol%.

11. Faserpulp nach Anspruch 3, dadurch gekennzeichnet, daß das aromatische Copolyamid die wiederkehrenden Struktureinheiten der Formeln III, IV und VII enthält, worin $Ar^1$ und $Ar^4$ 1,4-Phenylen sind, $Ar^5$ und $Ar^6$ methyl-, methoxy- oder chlorsubstituiertes 1,4-Phenylen sind, Q eine direkte C-C-Bindung bedeutet, und $Ar^9$ 1,3-Phenylen ist, wobei sich die Mengenanteile der wiederkehrenden Struktureinheiten der Formeln III, IV und VII sich innerhalb

folgender Bereiche, bezogen auf die Gesamtmenge dieser Struktureinheiten, bewegen:

wiederkehrende Struktureinheit der Formel III: 10 - 35 Mol%,
wiederkehrende Struktureinheit der Formel IV: 20 - 60 Mol%, und
wiederkehrende Struktureinheit der Formel VII: 10 - 35 Mol%.

**12.** Verfahren zur Herstellung des Faserpulps nach Anspruch 1 umfassend die Maßnahmen:

a) Zugabe von bis zu 10 Gew.% von Stapelfasern aus Polyacrylnitril und Stapelfasern aus aromatischem Polyamid, entweder in Form einer Fasermischung oder getrennte Zugabe jeder Fasersorte, sowie von mindestens 90 Gew.% Wasser in einen Pulper, der vorzugsweise mit einem Rührer ausgestattet ist, und

b) Behandlung der Fasermischung im Pulper in an sich bekannter Weise, bis der gewünschte Fibrillierungsgrad der Fasern erreicht ist.

**13.** Verfahren zur Herstellung des Faserpulps nach Anspruch 1 umfassend die Maßnahmen:

a1) Zugabe von bis zu 10 Gew.% von Stapelfasern aus Polyacrylnitril und/oder Stapelfasern aus aromatischem Polyamid, entweder in Form einer Fasermischung oder getrennte Zugabe jeder Fasersorte, sowie von mindestens 90 Gew.% Wasser in einen ersten Pulper,

a2) Vorbehandlung des Gemisches im ersten Pulper für eine derartige Zeitspanne und unter derartigen Bedingungen, so daß eine weitgehend homogene wässrige Fasermischung erhalten wird,

b1) Überführen der Fasermischung aus Schritt a2) in einen Refiner, um eine zusätzliche Öffnung der Faseroberflächen zu bewirken und den Fibrillierungsgrad zu erhöhen,

b2) Überführung der Fasermischung aus Schritt b1) in einen zweiten Pulper und Behandlung der Fasermischung in an sich bekannter Weise, um den Öffnungsgrad der Fasermischung zu erhöhen, und gegebenenfalls Zugabe weiterer Stapelfasern aus Polyacrylnitril und/oder Stapelfasern aus aromatischem Polyamid,

b3) Rückführung der Fasermischung aus dem zweiten Pulper in den Refiner gemäß Schritt b1) und Rückführung der Fasermischung aus dem Refiner in den zweiten Pulper gemäß Schritt b2), und

b4) Wiederholung von Schritt b3) bis der gewünschte Fibrillierungsgrad erreicht ist.

**14.** Verfahren zur Herstellung des Faserpulps nach Anspruch 13, dadurch gekennzeichnet, daß in Schritt a1) in den ersten Pulper nur Stapelfasern aus aromatischem Polyamid zugegeben werden und diese in den ersten Durchläufen gemäß Schritten b1), b2) und b3) im Refiner und im zweiten Pulper behandelt werden, und daß anschließend in Schritt b2) Polyacrylnitril-Fasern zugegeben werden und zusammen mit den Aramidfasern in weiteren Durchläufen durch den Refiner und den zweiten Pulper gemäß Schritten b1), b2) und b3) zu einem Faserpulp verarbeitet werden.

**15.** Verwendung des Faserpulps nach Anspruch 1 zur Herstellung von Verbundwerkstoffen, Brems- oder Kupplungsbelägen, Flachdichtungen nach dem Kalanderprozeß, Verstärkung von Elastomeren, insbesondere von faserverstärkten Zement- oder Betonbauteilen oder zur Verstärkung von thermo- oder duroplastischen Bauteilen im Spritzgieß- oder Extrusionsprozeß, oder zur Herstellung von Papieren.